# EUROPEAN PATENT APPLICATION

(11) **EP 1 775 889 A1**
(43) Date of publication of application: **18.04.2007**
(21) Application number: 05762032.0
(22) Date of filing: 15.07.2005
(51) Int. Cl.: H04L 12/46, H04L 12/28

(54) **BRIDGE AND TRANSMISSION DEVICE, AND INFORMATION SYSTEM**

(30) Priority: 20.07.2004 JP 2004212142
(71) Applicant: Pioneer Corporation, Tokyo 1538654 (JP)
(72) Inventor: OHNO, Kinya, PIONEER CORPORATION, Tsurugashima-shi, Saitama 350-2288 (JP); MINOSHIMA, Kunihiro, PIONEER CORPORATION, Tsurugashima-shi, Saitama 350-2288 (JP)
(74) Representative: Skuhra, Udo
(86) International application number: PCT/JP2005/013150
(87) International publication number: WO 2006/009109

(57) **Abstract**

A bridge is provided with a first portal connected to a first communication line forming one part of a network for transmitting/receiving information via the first communication line, and a second portal connected with a second communication line forming the other part of the network for transmitting/ receiving information via the second communication line. These first and second portals can transfer information received, to each other. When one of the first and second portals receives, in case a connection has already been established on the network including that bridge, environment updating information for updating the using environment of the connection, via one of the first and second communication lines, one of the first and second portals transfers the environment updating information received, to the other. The other of the first and second portals updates the using environment of the other of the first and second communication lines in accordance with the environment updating information transferred.

## Description

### Technical Field

The present invention relates to a bridge and a transmitting apparatus, which are applied to a network that complies with IEEE1394, for example, and an information system including the network provided with the bridge.

### Background Art

In IEEE (Institute of Electrical and Electronics Engineers, Inc.) 1394, as known as high-speed connection standards, it is possible to add or eliminate (hot plug) equipment, in operation of a network, by automatically recognizing the connection of the equipment. The IEEE 1394 network has a hierarchy structure including a node, a bus, and a net. Among this, a special node connecting buses is referred to as a bridge, and the bridge manages a net layer.

In this type of network, a connection (i.e. an information transmission route in the network) can be dynamically established, and all the nodes have the management function. Thus, in some cases, the network configuration and which node performs the management are not determined in advance.

As a technology of solving troubles which occur in the above case, for example, a patent document 1 describes a bandwidth management method in an information system, which is connected through the IEEE 1394 network and an ATM (Asynchronous Transfer Mode) network. According to this method, when the connection is established, a bandwidth is reserved in case a necessary bandwidth on each network cannot be ensured as a maximum required bandwidth, and the connection is established after it is judged whether or not the transmission can be performed in the reserved bandwidth.

Patent document 1: Japanese Patent Application Laid Open No. 2000-244524

### Disclosure of Invention

### Subject to be Solved by the Invention

However, the technology described in the patent document 1 is related to the bandwidth management method in establishing the connection, so that it has such a problem that it is not applicable if a used bandwidth is updated on the already established connection. For example, with regard to a bridge specification "P1394.1 Draft Standard for High Performance Serial Bus Bridges 2.0" (hereinafter referred to as P1394.1), which is one of IEEE 1394 and whose standardizing operation is in progress in 1394TA, it has no mechanism to update only bandwidth information on the established connection. Thus, in order to update the bandwidth information on the connection via the bridge, it is necessary to destroy the already established connection once and then reestablish it as a new connection.

In order to solve the above-mentioned problems, it is therefore an object of the present invention to provide a bridge and a transmission device, and an information system, capable of updating the used bandwidth, with the connection established.

### Means for Solving the Subject

### (Bridge)

The above object of the present invention can be achieved by a first bridge for functioning as a relay node on a network, wherein the bridge is provided with: a first portal for transmitting and receiving information via a first communication channel, the first portal being connected to the first communication channel constituting one portion of the network; and a second portal for transmitting and receiving information via a second communication channel, the second portal being connected to the second communication channel constituting another portion of the network, the first and second portals can transfer the received information to each other, and in case a connection is already established on the network including the bridge, if one of the first and second portals receives environment update information, which is one of the information and which is to update a use environment of the connection, via one of the first and second communication channels, the one of the first and second portals transfers the received environment update information to the other of the first and second portals, and the other of the first and second portals updates a use environment of the other of the first and second communication channel in accordance with the transferred environment update information.

According to the first bridge of the present invention, the two portals capable of transferring the received information to each other, i.e. the first and second portals, are connected to the first and second communication channels, respectively. By this, in the operation, the information can be transmitted and received between the first and second communication channels on the network. Each of the first and second portals can set and update the use environment of the communication channel between the portal itself and another node. The "use environment" herein means comprehensive operational conditions of the network in the information transmission, and includes an occupied bandwidth of each connection, operational conditions of each node, or the like.

In case the connection is established on the network including the bridge, when the use environment of the connection is updated, the bridge updates the use environment of either one of the first and second communication channels in accordance with the received environment update information. At this time, the environment update information is transmitted on the network from the apparatus capable of recognizing the updating of the use environment, such as a node which is a starting point of the updating, for example. In the bridge, the environment update information is received on one of the portals and transmitted to the other portal (co-portal). If receiving the environment update information, the other portal performs the updating process of the use environment of the communication channel to which the other portal itself is connected (i.e. out of the communication channels connected to this bridge, the communication channel on the opposite side of the environment-update-information receiving side), in accordance with the environment update information.

As described above, as in other information, the environment update information is transmitted on the network via the bridge, and if the bridge receives the environment update information from one of the first and second communication channels that the bridge connects, the bridges operates so as to update the use environment between the bridge itself and another node out of the other connection channel, so that it is possible to update the use environment, with the connection established. Therefore, by establishing the network using this bridge, it is possible to manage the use environment in a preferable condition, with the connection established.

The above object of the present invention can be achieved by a second bridge for functioning as a relay node on a network, wherein the bridge is provided with: a first portal for transmitting and receiving information via a first communication channel, the first portal being connected to the first communication channel constituting one portion of the network; and a second portal for transmitting and receiving information via a second communication channel, the second portal being connected to the second communication channel constituting another portion of the network, the first and second portals can transfer the received information to each other, and in case a connection is already established on the network including the bridge, if one of the first and second portals monitors a use environment of one of the first and second communication channels and detects that the use environment of the one of the first and second communication channels is updated, the one of the first and second portals generates environment update information, which is one of the information and which is to update a use environment of the connection, and transmits it to the other of the first and second portals, and the other of the first and second portals updates a use environment of the other of the first and second communication channel in accordance with the transmitted environment update information.

According to the second bridge of the present invention, the bridge itself does not receive but generates and outputs the environment update information. Namely, each of the portals in the bridge is constructed to monitor the use environment of the communication channel connected to the one portal itself, in the operation. If detecting the updating of the use environment of the communication channel during the monitoring, the portal generates and transmits the environment update information to the other portal.

As described above, the bridge monitors the communication channels that the bridge connects, and if detecting the updating of the use environment on one of the communication channels, it spontaneously updates the use environment on the other communication channel. Thus, even if there is no function of transmitting the environment update information to the node on the connection, it is possible to update the use environment, with the connection established. Therefore, it is possible to manage the use environment of the connection in a preferable condition, with the connection established.

In one aspect of the bridge of the present invention, the other of the first and second portals updates the use environment of the other of the first and second communication channel and transmits the environment update information to another bridge via the other of the first and second communication channels.

According to this aspect, out of the two portals of the bridge, the portal to which the environment update information is transferred from the portal that receives or generates the environment update information, not only updates the use environment of the communication channel connected to the portal itself, but also transmits the environment update information to anther bridge connected via the communication channel. Moreover, the another bridge operates in the same manner as described above, by which the use environment is updated one after another along the route with the connection established in the network. Namely, the environment update information is transmitted in the connection via the bridge, in the same manner as the data information transmitted by using this connection, and each bridge updates the use environment of the communication channel on the side that the environment update information is outputted.

Therefore, even if the communication channels in the connection are connected through a plurality of bridges, it is possible to update the use environment with the connection established, and manage it in a preferable condition.

In this aspect, if the other of the first and second portals succeeds in updating the use environment of the other of the first and second communication channels, the other of the first and second portals may transmit the environment update information to the another bridge via the other of the first and second communication channels.

In this case, if succeeding in updating the use environment, the bridge transmits the environment update information to a next bridge on the connection (i.e. out of the bridges connected via the communication channel, the bridge that is not the transmitter of the environment update information). If either one of the bridges existing on the connection fails in updating the use environment, that means the updating on the entire connection, which is an updating target, fails in the trial. As opposed to this, here, the environment update information is not transmitted from the bridge that fails in the updating, so that the updating process on another bridge in the trial is canceled. Therefore, it is possible to manage the updating process in an integrated manner, and perform the efficient operation.

In another aspect of the bridge of the present invention, if the other of the first and second portals fails in updating the use environment of the other of the first and second communication channels, the other of the first and second portals transmits updating failure information, which indicates a failure in the updating, to the one of the first and second portals, and the one of the first and second portals transmits the transmitted updating failure information to the one of the first and second communication channels.

According to this aspect, if failing in updating the use environment, the bridge transmits the updating failure information to the bridge one before on the connection (i.e. out of the bridges connected via the communication channel, the bridge that is the transmitter of the environment update information). The "updating failure information" herein is constructed such that the node on the connection can identify or recognize the failure in the updating process of the use environment, and control information may appended thereto, so as to perform a predetermined process which accompanies the failure in the updating.

The updating failure information is transferred in the opposite direction to that of the environment update information, and is transmitted to the node (including the bridge) that transmits the environment update information, i.e. a requester. Thus, the requester can recognize the failure in updating the use environment that the requester itself requests, and can perform the process in response to the failure, such as outputting again the environment update information. Thus, in this case, it is possible to update the use environment, more certainly. Moreover, it is also possible to perform more accurate management of the use environment.

In another aspect of the bridge of the present invention, if the other of the first and second portals is connected to a node in an end of the connection, without via the another node, the other of the first and second portals transmits updating success / failure information, which indicates a success or failure in the updating of the use environment, to the one of the first and second portals, and the one of the first and second portals transmits the transmitted updating success / failure information to one of the first and second communication channels.

According to this aspect, the bridge that is the last relay node on the connection performs the process of updating the use environment of the communication channel between the bridge itself and the node in the end of the connection, and then, as a result of the process, it transmits the updating success / failure information, which indicates whether or not the use environment is updated, to the bridge one before on the connection. With regard to the updating success / failure information, control information may be also appended thereto, so as to perform a process which accompanies the success or failure in the updating. The updating success / failure information is also transferred in the opposite direction to that of the environment update information, and is transmitted to the requester. Thus, the requester can recognize whether or not the updating of the use environment, which the requester itself requests, ends up in success, and it can perform the process responding to the success or failure of the updating, such as transmitting a stream corresponding to the new use environment onto the connection, or outputting again the environment update information. Moreover, it is possible to manage the use environment, more accurately.

In another aspect of the bridge of the present invention, the environment update information includes information for updating a used bandwidth on the connection, and the use environment includes the used bandwidth on the connection.

According to this aspect, the used bandwidth is updated in the established connection. If the occupied bandwidth of the stream transmitted to the communication channel changes in the connection, the unnecessary bandwidth is ensured, or the stream in which the occupied bandwidth increases cannot be transmitted. Thus, if the update information about the used bandwidth is included in the environment update information, the bridge that receives the environment update information updates the used bandwidth of the communication channels connected to the bridge itself, in accordance with the received environment update information, to thereby realize optimum bandwidth management. Incidentally, the environment update information in this case may include additional information other than the update information about the use environment.

### (Transmitting Apparatus)

The above object of the present invention can be achieved by a transmitting apparatus for transmitting information into a network, wherein the transmitting apparatus is connected to a bridge for functioning as a relay node on the network, via a communication channel constituting one portion of the network, the transmitting apparatus is provided with: an updating device for updating a use environment of the communication channel; and an update information generating device for generating environment update information, which is one of the information and which is to update a use environment of a connection, in accordance with a change in a use environment on the network of the transmitted information, and in case the connection is already established on the network, if the use environment on the network of the transmitted information changes, the updating device updates the use environment of the communication channel and the transmitting apparatus transmits the generated environment update information which is generated by the update information generating device to the bridge.

According to the transmitting apparatus of the present invention, if the use environment on the network changes with respect to the information that the transmitting apparatus itself transmits, it updates the use environment of the communication channel on the network connected to the transmitting apparatus itself. However, that is not enough to update the use environment on the route leading from the bridge. Thus, the transmitting apparatus of the present invention is constructed to generate the environment update information and transmit it to the bridge connected via the communication channel. Here, the environment updating operation and the generation and output processes of the environment update information may be performed in tandem or in parallel. For example, after the success in the environment updating operation is confirmed, the environment update information may be generated and outputted.

If the bridge for receiving the environment update information has the structure of the present invention, it operations as descried above, and the use environment of the bus on the connection path is updated one after another. Thus, by using this transmitting apparatus, it is possible to update the use environment on the connection, with the connection established.

### (Information system)

The above object of the present invention can be achieved by an information system, provided with the above-mentioned bridge of the present invention (including its various aspects) as the relay node, dynamically updating the use environment of the connection, in case the connection is already established on the network including the bridge, by transmitting the environment update information to the one of the first and second communication channels and by updating the use environment of the other of the first and second communication channels if the bridge receives the environment update information on the one of the first and second portals via the one of the first and the second communication channels.

According to the information system of the present invention, it is established by the network connected through the bridge of the present invention, so that it is possible to update the use environment of the connection, in accordance with the environment update information, with the connection established (i.e. dynamically). The environment update information may be issued from equipment other than the bridge, or the bridge may monitor equipment connected to the bridge itself, and issue the environment update information when the use environment is updated. Therefore, it is possible to update the use environment, with the connection established, and manage it in a preferable condition.

### (Transmitting Method)

The above object of the present invention can be achieved by a first transmitting method of transmitting information on a bridge for functioning as a relay node on a network, wherein the bridge is provided with: a first portal for transmitting and receiving information via a first communication channel, the first portal being connected to the first communication channel constituting one portion of the network; and a second portal for transmitting and receiving information via a second communication channel, the second portal being connected to the second communication channel constituting another portion of the network, and the first and second portals can transfer the received information to each other, wherein in case a connection is already established on the network including the bridge, if one of the first and second portals receives environment update information, which is one of the information and which is to update a use environment of the connection, via one of the first and second communication channels, the method is is provided with: on the one of the first and second portals, transferring the received environment update information to the other of the first and second portals, and on the other of the first and second portals, updating a use environment of the other of the first and second communication channel in accordance with the transferred environment update information.

According to the first transmitting method of the present invention, as in the case of the first bridge of the present invention, it is possible to manage the use environment in a preferable condition, with the connection established.

The above object of the present invention can be achieved by a second transmitting method of transmitting information on a bridge for functioning as a relay node on a network, wherein the bridge comprises: a first portal for transmitting and receiving information via a first communication channel, the first portal being connected to the first communication channel constituting one portion of the network; and a second portal for transmitting and receiving information via a second communication channel, the second portal being connected to the second communication channel constituting another portion of the network, and the first and second portals can transfer the received information to each other, wherein in case a connection is already established on the network including the bridge, if one of the first and second portals monitors a use environment of one of the first and second communication channels and detects that the use environment of the one of the first and second communication channels is updated, the method is provided with: on the one of the first and second portals, generating environment update information, which is one of the information and which is to update a use environment of the connection, and transmitting it to the other of the first and second portals, and on the other of the first and second portals, updating a use environment of the other of the first and second communication channel in accordance with the transmitted environment update information.

According to the second transmitting method of the present invention, as in the case of the second bridge of the present invention, it is possible to manage the use environment in a preferable condition, with the connection established.

The above object of the present invention can be achieved by a third transmitting method of transmitting information on a transmitting apparatus for transmitting information into a network, wherein the transmitting apparatus is connected to a bridge for functioning as a relay node on the network, via a communication channel constituting one portion of the network, and the transmitting apparatus is provided with: an updating device for updating a use environment of the communication channel; and an update information generating device for generating environment update information, which is one of the information and which is to update a use environment of a connection, in accordance with a change in a use environment on the network of the transmitted information, wherein in case the connection is already established on the network, if the use environment on the network of the transmitted information changes, the method is provided with: on the updating device, updating the use environment of the communication channel and on the transmitting apparatus, transmitting the generated environment update information which is generated by the update information generating device, to the bridge.

According to the third transmitting method of the present invention, as in the case of the third bridge of the present invention, it is possible to manage the use environment in a preferable condition, with the connection established.

As explained above, according to the bridge of the present invention, it is provided with the first and second portals which function as described above. Thus, it is possible to update the use environment, with the connection established. Moreover, by establishing the network using the bridge, it is possible to manage the use environment in a preferable condition, with the connection established.

Moreover, according to the transmitting apparatus of the present invention, it is provided with the updating device and the update information generating device, so that the use environment is updated and the environment update information is issued to the bridge. Thus, in the network to which the transmitting apparatus is applied, it is possible to manage the use environment in a preferable condition, with the connection established.

Moreover, according to the information system of the present invention, it is provided with the bridge of the present invention. Thus, it is possible to update the use environment, with the connection established, and to manage the use environment in a preferable condition, with the connection established.

Moreover, according to the transmitting method of the present invention, it is provided with the updating process and the update information generating process, so that it is possible to manage the use environment in a preferable condition, with the connection established.

These effects and other advantages of the present invention will become more apparent from the following embodiment.

### Brief Description of Drawings

[FIG. 1] FIG. 1 is a block diagram showing the structure of an information system in an embodiment of the present invention.
[FIG. 2] FIG. 2 is a block diagram showing the structure of a bridge in the information system in the embodiment.
[FIG. 3] FIG. 3 is a data format showing the structure of a message transmitted to the information system in the embodiment.
[FIG. 4] FIG. 4 is a diagram showing the basic structure of an information system in a comparison example.
[FIG. 5] FIG. 5 is a diagram showing the basic structure of the information system in the embodiment.
[FIG. 6] FIG. 6 is a flowchart showing the operation procedure of the bridge in the embodiment.
[FIG. 7] FIG. 7 is a sequence showing an operation procedure in case of success in an updating operation, in the information system in the embodiment.
[FIG. 8] FIG. 8 is a sequence showing an operation procedure in case of failure in the updating operation, in the information system in the embodiment.
[FIG. 9] FIG. 9 is a sequence showing an operation procedure in case of failure in the updating operation, in the information system in the embodiment.
[FIG. 10] FIG. 10 is a diagram showing the structure and the operation procedure of an information system in a modified example of the embodiment.

### Description of Reference Codes

1, 2, 3...network, 4, 9...digital TV, 5...DVD player, 6, 7...bridge, 61, 62...portal (of bridge 6), 71, 72...portal (of bridge 7), 8...AV-HDD recorder

### Best Mode for Carrying Out the Invention

Hereinafter, the best mode for carrying out the invention will be explained, in each embodiment with reference to the drawings.

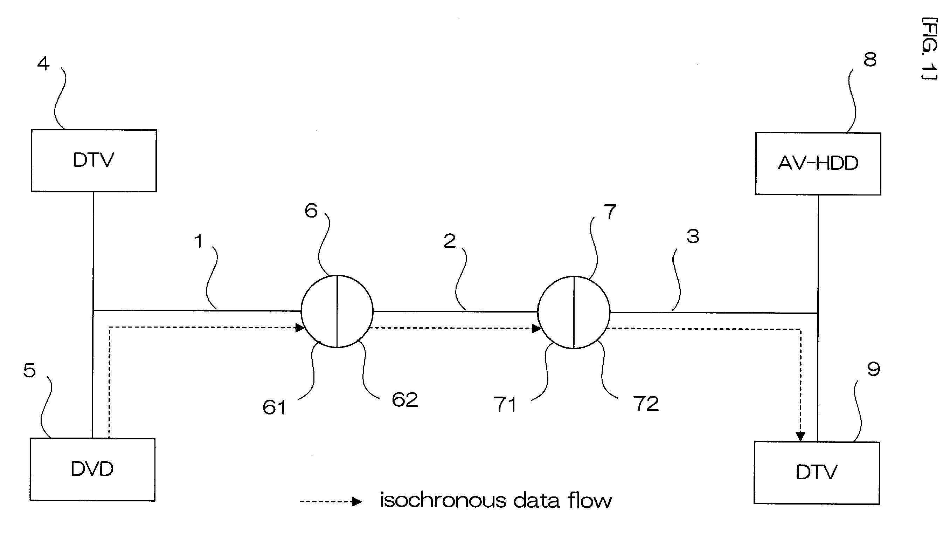

Hereinafter, an embodiment of the present invention will be explained with reference to FIG. 1 to FIG. 9.

### <Structure of Information System>

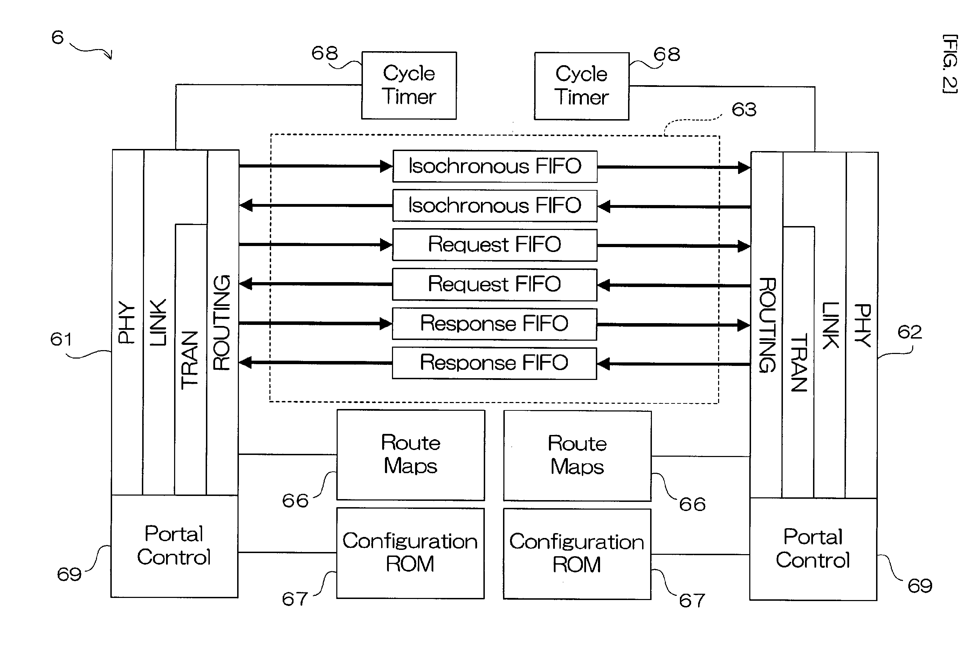

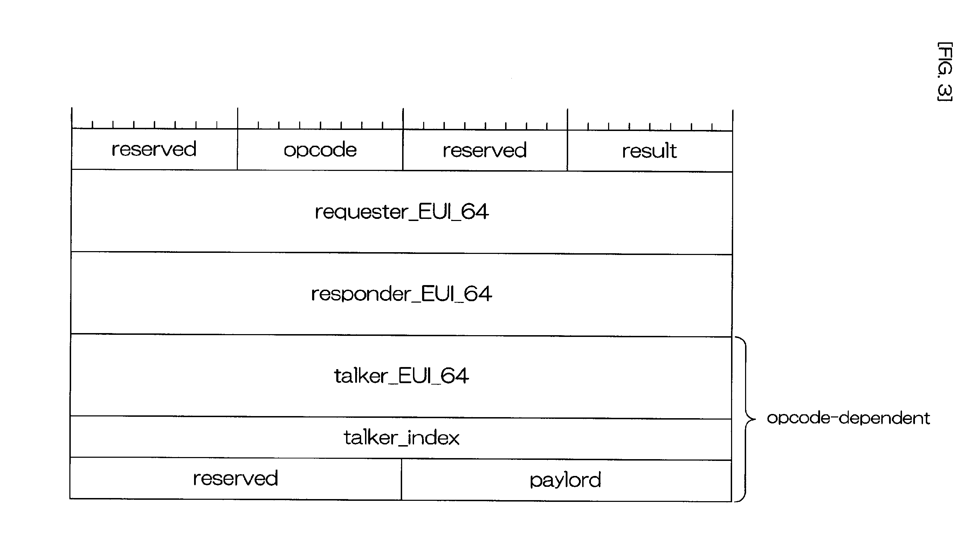

Firstly, the structures of an information system and a bridge in an embodiment will be explained with reference to FIG. 1 to FIG. 3. FIG. 1 shows the structure of the information system in the present embodiment. FIG. 2 is shows the structure of a bridge applied to the information system, with a bridge 6 representing it. FIG. 3 shows one example of a message data format to a message issued when a use environment in the information system is updated.

In FIG. 1, the information system in the present embodiment is established by connecting a network 1 and a network 3 with a network 2, wherein the network 1 includes a digital TV (hereinafter referred to as DTV) 4 and a DVD player 5, and the network 3 includes an AV-HDD recorder 8 and a DTV 9. Such an information system is embodied as a home network and other AV networks, for example. Here, the network 1 and the network 2 are connected through a bridge 6, and the network 2 and the network 3 are connected through a bridge 7. Thus, the networks 1 and 3 can provide a service on either one of the networks, to the other network.

Such an information system is divided into a plurality of networks via the bridges, so that only a packet that is necessary to be transferred to another network can be filtered, and as a result, entire traffic can be reduced. Moreover, an isochronous resource (i.e. a transmission bandwidth, a channel, etc.) is managed on each network at the time of isochronous data transfer, so that there is such an advantage that it does not influence another network, or the like. For example, if video images of the DVD player 5 are watched on the DTV 4 on the network 1, the isochronous resource on the network 1 is ensured, and the connection between the DVD player 5 and the DTV 4 is established to thereby perform the isochronous transmission. The isochronous resource used here does not influence the networks 2 and 3.

Each of the networks 1, 2, and 3 indicates a network capable of transferring the isochronous data. For example, the networks 1 and 3 may be wired IEEE 1394 networks, and the network 2 may be a network that complies with a long-distance 1394 standard, referred to as wired IEEE 1394b, or may be a wireless LAN (Local Area Network), like IEEE802.11e.

The bridge 6 is provided with: a portal 61 connected to the network 1; and a portal 62 connected to the network 2. The bridge 7 is provided with: a portal 71 connected to the network 2; and a portal 72 connected to a network 3. The two portals, constituting each of the bridges 6 and 7, can mutually exchange information inside the bridge.

FIG. 2 takes the bridge 6 for example, and shows the structure of the bridges. In FIG. 2, each of the portals 61 and 62 of the bridge 6 is established in a hierarchy, such as a physical layer and a data link layer, and it is provided with: route maps 66; a configuration ROM 67; and a cycle timer 68. Then, the whole is integrally controlled by a portal control 69. The portals 61 and 62 are interconnected in the bridge 6 so that bidirectional communication can be performed via a group of FIFO 63. Incidentally, the bridge 7 is also constructed in the same manner as the bridge 6.

Each of the bridges 6 and 7 in the present embodiment is constructed such that if receiving an UPDATE BANDWIDTH message, it updates a used bandwidth in accordance with the received UPDATE BANDWIDTH message, with the connection established on the route including the bridge itself. Namely, if one of the two portals receives the UPDATE BANDWIDTH message, it transmits the UPDATE BANDWIDTH message to the other portal, and the other portal updates the used bandwidth of the communication channel connected to the other portal (a communication channel on the opposite side of the receiving side).

The UPDATE BANDWIDTH message is such data that if an occupied bandwidth on the bus of a stream, transmitted from transmitting equipment, changes on the route that allows the establishment of the connection for transferring real-time data, notice of the bandwidth change is given onto the route in which the connection is established. The UPDATE BANDWIDTH message is transmitted on the network from equipment that can detect the bandwidth change of the isochronous data, which is transmitted to the information system, such as the node (the DTV 4, the DVD player 5, the AV-HDD recorder 8, and the DTV 9 herein) which is a starting point of the updating, for example.

In FIG. 3, an opcode-dependent field of the UPDATE BANDWIDTH message is provided with: a talker_EUI_64 indicating the ID of the equipment for transmitting the isochronous data; a talker_index indicating the ID of a transmission plug of the equipment indicated by the talker_EUI_64; and a payload indicating the payload value of the transmitted isochronous data. More specifically, the talker_EUI_64 indicates EUI_64 written on the Configuration ROM of the equipment for transmitting the isochronous data on the established connection, and the transmitted stream is uniquely judged by the talker_index. Namely, the combination of the talker_EUI_64 and the talker_index makes for a stream ID capable of uniquely identifying each of the isochronous data flow (stream) in the information system.

Incidentally, out of the UPDATE BANDWIDTH message, the field other than the above-mentioned opcode-dependent field complies with the data format of a net management message of P 1394.1. The net management message uses an asynchronous packet, for communication. The communication of a request message uses Write transaction for a MESSAGE_REQUEST register of a CSR (Control and Status Register) space, defined by IEEE1212. The communication of a response message uses Write transaction for a MESSAGE_RESPONSE register, as well. Namely, the UPDATE BANDWIDTH message is distinguished from the request message and the response message, depending on which register to access out of the MESSAGE_REQUEST register and the MESSAGE_RESPONSE register. Moreover, the UPDATE BANDWIDTH message is written into either an area (or a memory) for request or an area (or a memory) for response in the portal in accordance with which register to access, to thereby perform the communication. Incidentally, in a result field, in the case of the response message, data indicating the success or failure of the updating process is written.

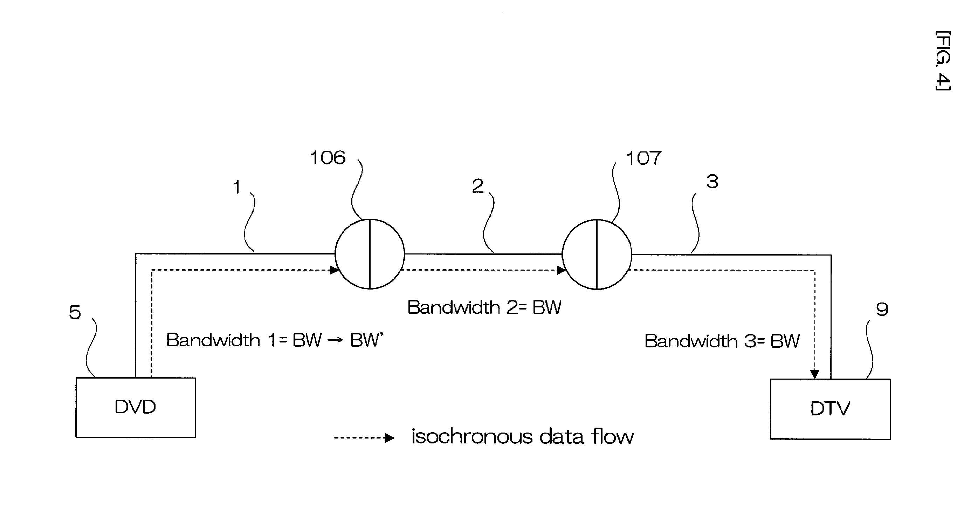

The operation in the bandwidth updating of the information system will be explained with reference to FIG. 4 to FIG. 9.

### <Basic Operation of Information System>

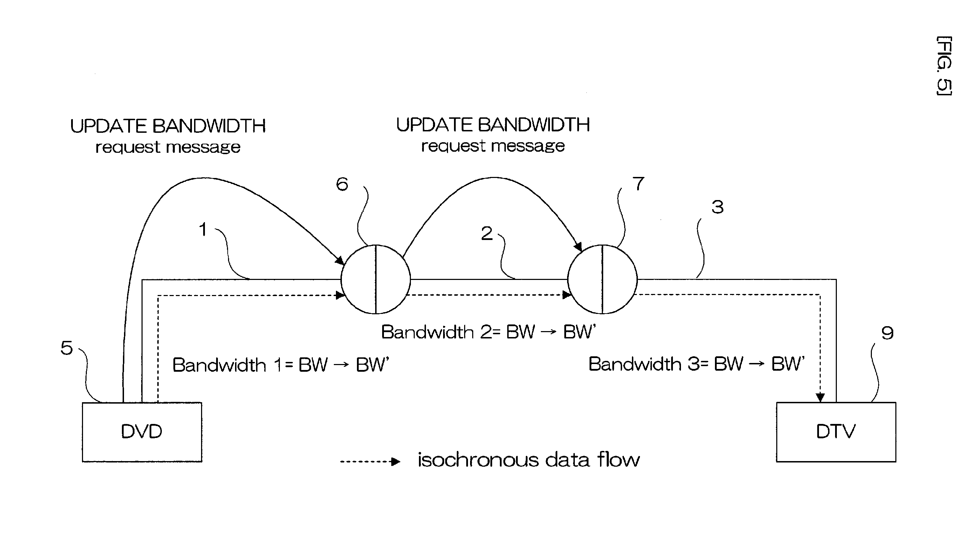

Firstly, the basic operation as the information system will be explained with reference to FIG. 4 and FIG. 5. FIG. 4 shows the basic structure of an information system in a comparison example. FIG. 5 shows the basic structure of the information system in the present embodiment. Incidentally, it is assumed that the initial conditions both in the embodiment and in the comparison example allow the connection to be established via the bridges 6 and 7 between the DVD player 5 and the DTV 9 in the system structure as shown in FIG. 1.

The comparison example is constructed to eliminate the mechanism for updating the used bandwidth on the already established connection in the structure of the present embodiment, and instead, to have a mechanism for establishing and destroying the connection for transmitting the stream in the bridge environment. For example, P1394.1 has the mechanism to establish and destroy the connection for transmitting the stream in the bridge environment, described in "4.6 Stream connection management". Thus, in the comparison example, the used net management message uses JOIN, LISTEN messages described in "6.6 Net management messages" and "6.6.3 Stream management messages" to thereby establish the connection, and uses a LEAVE message to thereby destroy it. Namely, in P1394.1, there is no mechanism for updating only the bandwidth information of the already established connection, unlike the information system in the embodiment, so that in order to update the bandwidth information on the connection via the bridge, it is necessary to destroy the already established connection once and then reestablish it as a new connection.

As described above, in case there is no mechanism for updating the used bandwidth on the already established connection, if, as shown in FIG. 4, the bandwidth on the network 1, i.e. a bandwidth 1, occupied by the stream transmitted by the DVD player 5 is reduced from BW to BW', then the updating of the used bandwidth by the DVD player 5 can be performed only on the network 1, and the occupied bandwidths on the networks 2 and 3, i.e. a bandwidth 2 and a bandwidth 3, cannot be changed from BW. This is because bridges 106 and 107, which are usually used, cannot detect the bandwidth change nor perform the bandwidth updating operation on their own. Thus, if the occupied bandwidth is reduced (BW>BW'), the unnecessary bandwidths remain ensured on the networks 2 and 3, so that it is impossible to realize the optimum bandwidth management, with the connection established. Thus, in this case, it is necessary to destroy the once established connection and then reestablish the connection having the newly updated bandwidth BW'. Moreover, if the occupied bandwidth is increased (BW<BW'), the incremented bandwidths on the networks 2 and 3 cannot be ensured, so that it is impossible to transmit the stream after the occupied bandwidth is increased.

In contrast, in the present invention, if, as shown in FIG. 5, the bandwidth on the network 1, i.e. the bandwidth 1, occupied by the stream transmitted by the DVD player 5 is reduced from BW to BW', then the updating of the used bandwidth by the DVD player 5 can be performed only on the network 1, but notice of the change is given to each network from the DVD player 5, as an UPDATE BANDWIDTH request message. Namely, the DVD player 5 corresponds to one example of the "transmitting apparatus" of the present invention.

The UPDATE BANDWIDTH request message is one example of the "environment update information" of the present invention, and it is transmitted via the network on the connection. Then, the bridges 6 and 7, which receive this request message, update the occupied bandwidths on the networks 2 and 3, i.e. the bandwidth 2 and the bandwidth 3, from BW to BW'. Namely, it is possible to dynamically perform the optimum band management, with the connection established.

### <Basic Operation of Bridge>

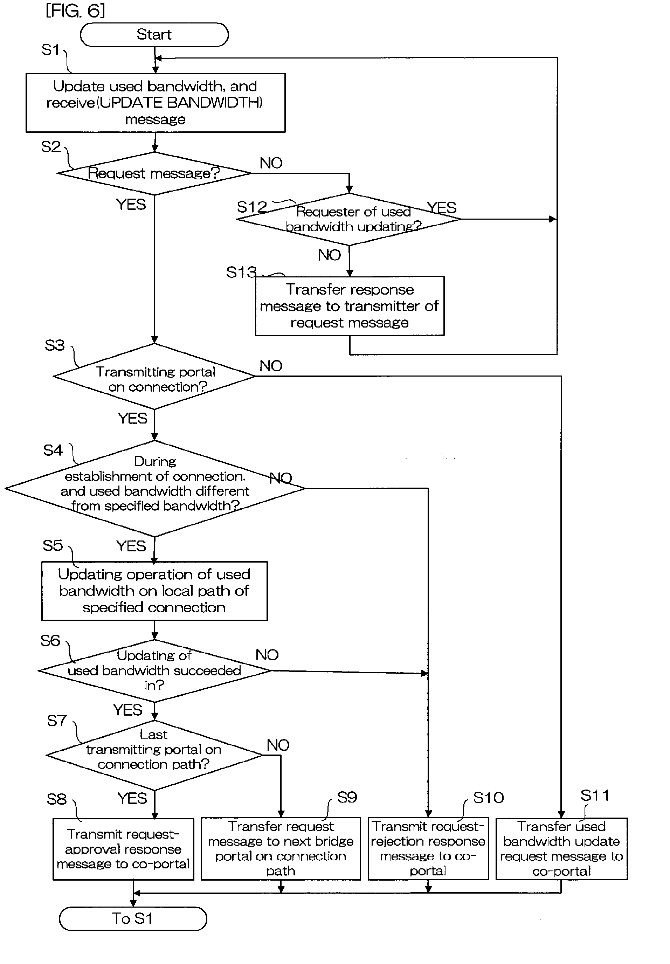

The operation as the system of the information system in the present invention is mainly realized by the bridge. Thus, next, the basic operation of the bridge will be explained with reference to FIG. 6. FIG. 6 shows the operation procedure when the used bandwidth update message (the UPDATE BANDWIDTH message) is received on each portal.

In FIG. 6, if any one of the portals of the bridges 6 and 7 receives the UPDATE BANDWIDTH message (step S1), the portal judges whether the UPDATE BANDWIDTH message is the request message or the response message (step S2).

If the UPDATE BANDWIDTH message is the request message (the step S2: YES), then it is judged whether or not the portal that receives the UPDATE BANDWIDTH request message is a transmitting portal (step S3). The transmitting portal is a portal for transmitting the stream onto the network (local bus) connected to the portal. Namely, the transmitting portal is relatively determined, depending on the direction of the stream. For example, in the case of on the connection path shown by the dotted line in FIG. 1, the portal 62 or the portal 72 corresponds to the transmitting portal.

If the portal that receives the message is not the transmitting portal (the step S3: NO), this portal transfers the UPDATE BANDWIDTH request message to the co-portal (step S11). For example, in the case of on the connection path shown in FIG. 1, the message is transferred from the portal 61 or the portal 72 to the portal 62 or the portal 72, which is the transmitting portal.

On the other hand, if the portal that receives the message is the transmitting portal (the step S3: YES), then it is further judged whether or not the used bandwidth is updated, with reference to the message (step S4). Namely, if the connection is already established and if it is clear that the bandwidth used for the transmission of the UPDATE BANDWIDTH request message is different from a specified bandwidth, i.e. it is updated (the step S4: YES), the portal that receives the message performs the operation of updating the used bandwidth on the local bus (step S5). The bandwidth operation performed here is to ensure the necessary bandwidth increment from IRM (Isochronous Resource Manager) on the local bus, in the case of the 1394 network, or to return the bandwidth decrement. For example, in the case of on the connection path in FIG. 1, the used bandwidth on the network 2 is updated by the portal 62 (or the used bandwidth on the network 3 is updated by the portal 72).

In contrast, if the transmission channel is not established or if the bandwidth information is not updated (the step S4: NO), a response message to reject the bandwidth updating request is transferred to the co-portal (step S10). In the above-mentioned example, in this case, the response message is transferred from the portal 62 or the portal 72, which is the transmitting portal, to the portal 61 or the portal 71. Moreover, in the same manner, if the bandwidth updating operation fails for some reasons, such as the remaining bandwidth is insufficient (the step S6: NO), the response message to reject the bandwidth updating request is transferred to the co-portal (the step S10).

If the bandwidth updating operation succeeds (the step S6: YES), it is judged whether or not the portal that receives the request message is the last transmitting portal (step S7). The last transmitting portal is a portal for transmitting the stream to receiving equipment on the network in which the receiving equipment exists, on the transmission channel with the connection established. For example, in the case of on the connection path in FIG. 1, the last transmitting portal is the portal 72, and the portal 62 is not the last transmitting portal.

If the transmitting portal is the last transmitting portal (the step S7: YES), an UPDATE BANDWIDTH response message indicating approval for the request is transmitted to the co-portal (step S8). If the transmitting portal is not the last transmitting portal, the UPDATE BANDWIDTH request message is transmitted to the portal on the next transmission channel (step S9). For example, in the case of on the connection path in FIG. 1, if the portal 62 is the transmitting portal, the message is transmitted to the portal 71 via the network 2. Thus, in the connection established on the route connected through the plurality of bridges, as long as the bandwidth updating operation succeeds, the UPDATE BANDWIDTH request message is transmitted via the bridges one after another, and along with that, the used bandwidth on the local bus is updated one after another. Then, if the UPDATE BANDWIDTH request message is transmitted up to the last transmitting portal (the step S8), or if the request is rejected on the portal in the middle of the transmission channel (the step S10), the response message for the request message is transmitted on a route opposite to the route for the request message.

Incidentally, in case the message received in the beginning is the response message (the step S2: NO), if the portal that receives this is the portal (requester) for firstly transmitting the UPDATE BANDWIDTH request message, the condition returns the one to receive the message again (the step S1). If it is not the requester, the response message is transferred to the portal which exists in the direction of the requester, and the condition returns the one to receive the message again (the step S1).

### <Message Transmission in Information System>

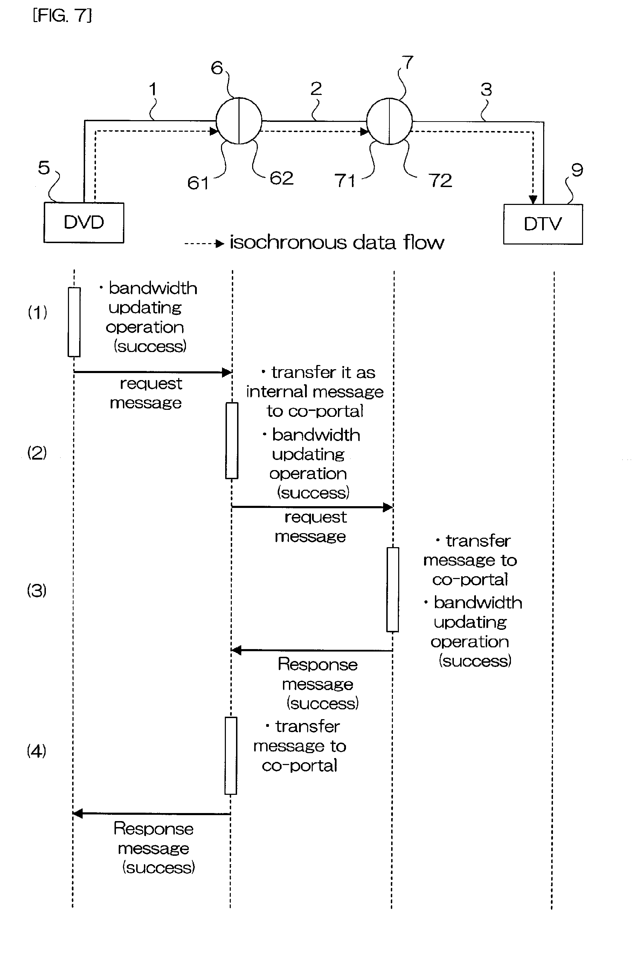

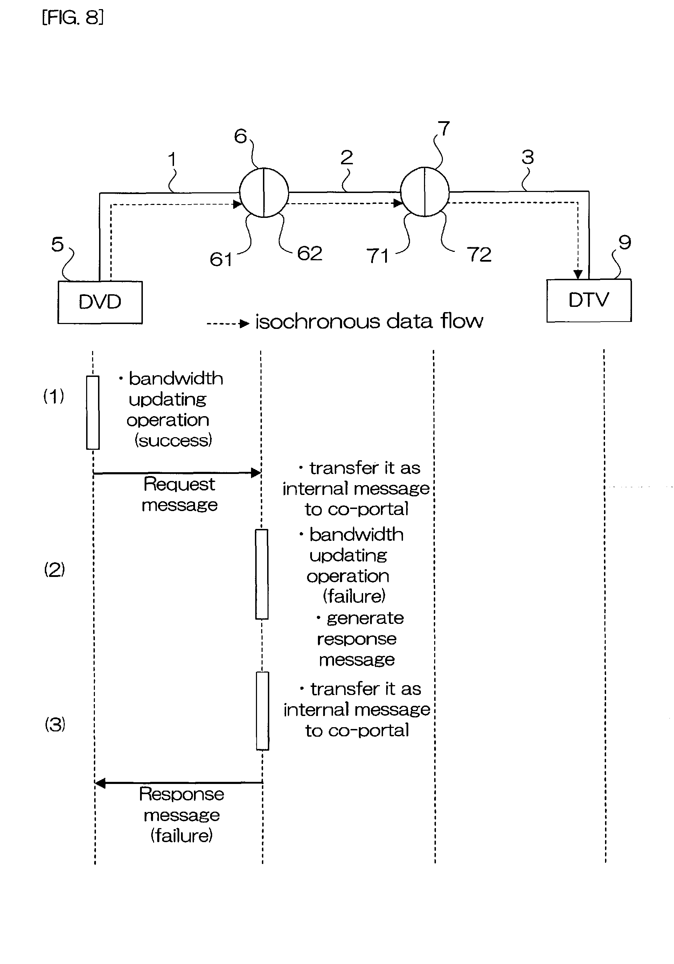

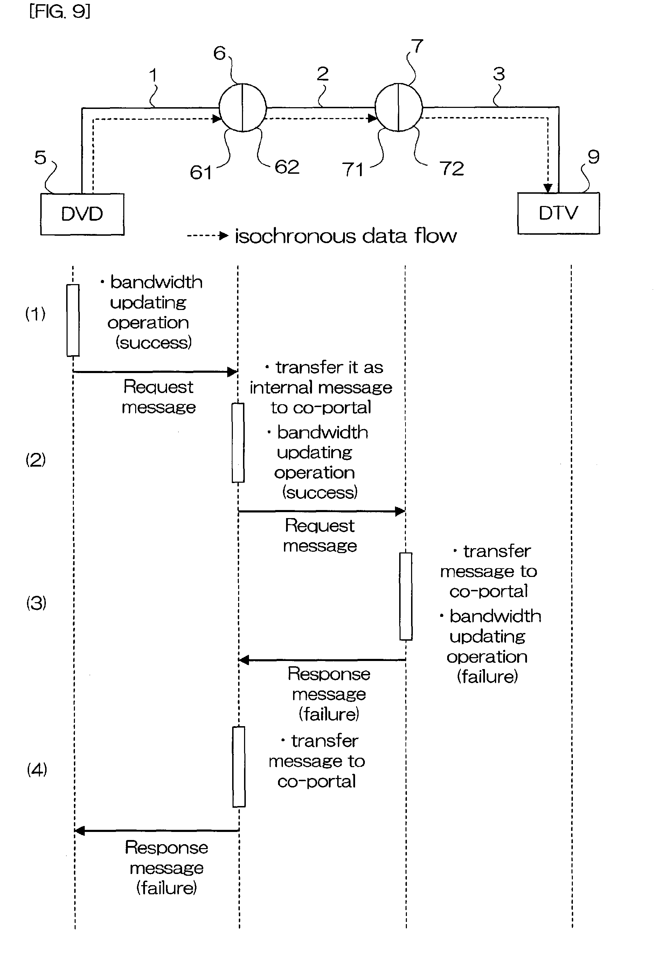

Based on the basic operation of the bridge explained above, an explanation will be given for the operation of the information system that accompanies the transmission of the message about the updating operation, in both cases of success and failure in the bandwidth updating, with reference to FIG. 7 to FIG. 9. FIG. 7 shows the operation of each node on the connection in case of success in the bandwidth updating. Each of FIG. 8 and FIG. 9 shows the operation of each node in case of failure.

In the initial condition, the connection is established via the bridges 6 and 7 between the DVD player 5 and the DTV 9 in the information system. In establishing the connection, for example, in accordance with P1394.1, the net management message for establishing the connection along the connection to be established, is transmitted via the bridges on the route between the transmitting equipment (talker) and the receiving equipment (listener). At that time, each equipment and portal on the route share the necessary bandwidth information, the stream ID of the stream transmitted by the transmitting equipment, and an information about the receiving equipment and the transmitting equipment regarding the connection. Moreover, each portal holds a routing map of the entire network, so that it can transmit the desired message along the connection route.

### (Operation in case of Success in Bandwidth Updating)

An explanation will be given for the case where the bandwidth updating operation is performed, with the connection established, and it succeeds, with reference to FIG. 7.

(1) In FIG. 7, the DVD player 5, which is the transmitting equipment, holds video or audio data to be outputted to the network 1 by the DVD Player 5 itself, and it can judge what size of bandwidth the data occupies on the network 1. For example, when a CD is reproduced, if the disc is changed to a DVD-Audio disc, it is possible to detect the change in bandwidth to be occupied on the network before the audio data is transmitted on the network. If detecting the increase in the bandwidth to be occupied on the network, the DVD player 5 additionally ensures the incremental bandwidth on the network 1 on the local bus connected to the DVD player 5. If succeeding in the ensuring of the incremental bandwidth, the DVD player 5 transmits the UPDATE BANDWIDTH request message to the receiving portal 61 on the network 1 of the transmitted stream.

(2) If the UPDATE BANDWIDTH request message issued from the DVD player 5 is received on the receiving portal 61 on the network 1, the receiving portal 61 transfers the received UPDATE BANDWIDTH request message to the transmitting portal 62, which is the co-portal, as an internal message in the bridge 6. The transmitting portal 62 that receives the BANDWIDTH request message performs an operation for ensuring the incremental bandwidth necessary on the network 2. If succeeding in the ensuring, the transmitting portal 62 transmits the BANDWIDTH request message to the receiving portal 71 on the next route.

(3) If the UPDATE BANDWIDTH request message issued from the transmitting portal 62 is received on the receiving portal 71 on the network 2, the receiving portal 71 transfers the received UPDATE BANDWIDTH request message to the transmitting portal 72, which is the co-portal, as an internal message in the bridge 7. The transmitting portal 72 that receives the BANDWIDTH request message performs an operation for ensuring the incremental bandwidth necessary on the network 3. If succeeding in the ensuring, because it is the last transmitting portal on the route, the transmitting portal 72 generates the UPDATE BANDWIDTH response message, which is one example of the "updating success / failure information" of the present invention, and transfers it to the receiving portal 71, which is the co-portal, as an internal message in the bridge 7. The receiving portal 71 that receives the BANDWIDTH response message transfers the BANDWIDTH response message to the transmitting portal 62, which transfers the BANDWIDTH request message in (2).

(4) The transmitting portal 62 that receives the BANDWIDTH response message transfers it to the receiving portal 61, which is the co-portal, as an internal message in the bridge 6. The receiving portal 61 transfers the BANDWIDTH response message to the DVD player 5, which is the requester of the BAND WIDTH request message. Then, the sequence in FIG. 7 ends.

Incidentally, in this example, if the bandwidth updating succeeds on the entire connection path, the BANDWIDTH response message is returned to the requester. However, even if it is constructed such that the response message indicating the success is not transmitted, it is possible to provide a minimal function, which is to perform the updating operation on each of the networks connected to the bridges. Moreover, as described later, only if the updating operation fails, notice indicating the fact may be given to the requester.

### (Operation in case of Failure in Bandwidth Updating: 1)

Next, an explanation will be given for the case where the judgment of failure of the UPDATE BANDWIDTH request message is performed, due to the failure of the bandwidth updating operation of the portal 62, with reference to FIG. 8.

(1) In FIG. 8, the DVD player 5 additionally ensures the incremental bandwidth on the network 1 on the local bus connected to the DVD Player 5 itself. If succeeding in the ensuring of the incremental bandwidth, the DVD player 5 transmits the UPDATE BANDWIDTH request message to the receiving portal 61 on the local bus of the transmitted stream.

(2) If the UPDATE BANDWIDTH request message issued from the DVD player 5 is received on the receiving portal 61 on the network 1, the receiving portal 61 transfers the received UPDATE BANDWIDTH request message to the transmitting portal 62, which is the co-portal, as an internal message in the bridge 6.

The transmitting portal 62 that receives the UPDATE BANDWIDTH request message performs an operation for ensuring the incremental bandwidth necessary on the network 2. If failing in the ensuring, the transmitting portal 62 generates the UPDATE BANDWIDTH response message, which is one example of the "updating failure information" of the present invention.

(3) The UPDATE BANDWIDTH response message is transferred as an internal message in the bridge 6, from the transmitting portal 62 to the receiving portal 61, which is the co-portal. The receiving portal 61 transfers the UPDATE BANDWIDTH response message to the DVD player 5, which is the requester of the BAND WIDTH request message. Then, the sequence in FIG. 8 ends.

### (Operation in case of Failure in Bandwidth Updating: 2)

Next, an explanation will be given for the case where the judgment of failure of the UPDATE BANDWIDTH request message is performed, due to the failure of the bandwidth updating operation of the portal 72, with reference to FIG. 9.

The operation in this case is substantially the same as the sequences in the above-mentioned two examples. (1), (2) In FIG. 9, on the bridge 6, the portal 62, to which the BANDWIDTH request message is transferred from the portal 61, succeeds in the updating operation and transmits the BANDWIDTH request message to the portal 71.

(3) The portal 71 transfers the BANDWIDTH request message to the receiving portal 72. However, here, the portal 72 fails in the bandwidth updating operation. Then, it generates the UPDATE BANDWIDTH response message, which is one example of the "updating failure information" of the present invention, and transfers it to the portal 71.

(4) If receiving The UPDATE BANDWIDTH response message, the portal 62 transfers it to the portal 61 so as to transmit this response message to the requester (in this case, the DVD player 5) of the request message. The portal 61 transmits the transferred response message to the DVD player 5. Then, the sequence in FIG. 9 ends.

As described above, in the present embodiment, in the information system for transmitting the real-time data, such as images and audio, via the bridges, if the occupied bandwidth of the stream transmitted from the transmitting equipment changes on the route with the connection established, it is possible to update the used bandwidth, with the connection established, without such a procedure that the connection is once destroyed and newly reestablished, because (1) notice of the change is given to the route with the connection established, as the UPDATE BANDWIDTH request message, and (2) each of the bridges on the route performs the bandwidth updating operation on the bus connected to the bridge itself, in accordance with the UPDATE BANDWIDTH request message. Therefore, it is possible to dynamically realize the optimum bandwidth management on each bus (i.e. the entire route with the connection established).

### (Modified Example)

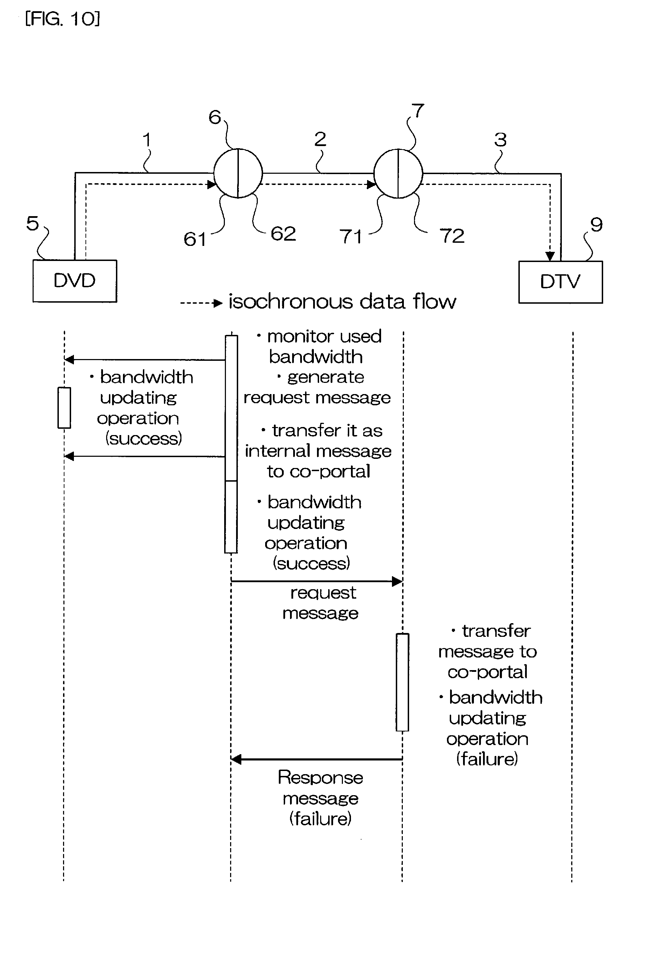

In the abovementioned embodiment, the explanation is given with the requester of the UPDATE BANDWIDTH request message as the DVD player 5. However, the requester may be another node, such as equipment or bridges. For example, if the network 1 is based on IEEE1394, it may be constructed, as shown in FIG. 10, such that the portal 61 regularly monitors the output plug oPCR (output plug control register) of the DVD player 5 by using asynchronous communication after the connection is established, and detects a change in the payload value on the oPCR, and if detecting the change in payload, the portal 61 (the receiving portal that exists on the transmission channel of the stream on the network in which the transmitting equipment exists) becomes he requester of the UPDATE BANDWIDTH request message.

In this configuration example, even if the DVD player 5 is the equipment that cannot be the requester of the UPDATE BANDWIDTH request message, it is possible to obtain the same effects as those in the above-mentioned embodiment if the bridges 6 and 7 on the network cope with the situation. Moreover, the equipment that can be the requester of the UPDATE BANDWIDTH request message is not limited to the transmitting equipment. Thus, it is also possible to obtain the same effects as those in the above-mentioned embodiment even on the network having the transmitting equipment that cannot be the requester of the UPDATE BANDWIDTH request message.

The present invention is not limited to the above-mentioned embodiment, and various changes may be made, if desired, without departing from the essence or spirit of the invention which can be read from the claims and the entire specification. A bridge, a transmitting apparatus, and an information system, which involve such changes, are also intended to be within the technical scope of the present invention.

For example, the information system which is an application target of the present invention may be a network which ensures a communication channel by ensuring the bandwidth necessary in the isochronous data transmission, and it is not limited to IEEE 1394. Any information system is available if capable of transmitting the UPDATE BANDWIDTH message and capable of performing the ensuring and returning operation of the necessary changed bandwidth in accordance with the UPDATE BANDWIDTH message on each network.

Moreover, with regard to the entire structure of the information system via the bridges, it is not limited to the structure of the embodiment in case of the information system capable of performing the ensuring and returning operation of the necessary changed bandwidth in accordance with the UPDATE BANDWIDTH message on each network.

### Industrial Applicability

The bridge, the transmitting apparatus, and the information system of the present invention can be applied to a bridge and a transmitting apparatus which are applied to a network which complies with IEEE 1394, for example, and moreover, an information system including the network provided with the bridge.

## Claims

1. A bridge for functioning as a relay node on a network, wherein said bridge comprises:
a first portal for transmitting and receiving information via a first communication channel, the first portal being connected to the first communication channel constituting one portion of the network; and
a second portal for transmitting and receiving information via a second communication channel, the second portal being connected to the second communication channel constituting another portion of the network,
said first and second portals can transfer the received information to each other, and
in case a connection is already established on the network including said bridge, if one of said first and second portals receives environment update information, which is one of the information and which is to update a use environment of the connection, via one of the first and second communication channels, the one of said first and second portals transfers the received environment update information to the other of said first and second portals, and the other of said first and second portals updates a use environment of the other of the first and second communication channel in accordance with the transferred environment update information.

2. A bridge for functioning as a relay node on a network, wherein said bridge comprises:
a first portal for transmitting and receiving information via a first communication channel, the first portal being connected to the first communication channel constituting one portion of the network; and
a second portal for transmitting and receiving information via a second communication channel, the second portal being connected to the second communication channel constituting another portion of the network,
said first and second portals can transfer the received information to each other, and
in case a connection is already established on the network including said bridge, if one of said first and second portals monitors a use environment of one of the first and second communication channels and detects that the use environment of the one of the first and second communication channels is updated, the one of said first and second portals generates environment update information, which is one of the information and which is to update a use environment of the connection, and transmits it to the other of said first and second portals, and the other of said first and second portals updates a use environment of the other of the first and second communication channel in accordance with the transmitted environment update information.

3. The bridge according to claim 1, wherein the other of said first and second portals updates the use environment of the other of the first and second communication channel and transmits the environment update information to another bridge via the other of the first and second communication channels.

4. The bridge according to claim 2, wherein the other of said first and second portals updates the use environment of the other of the first and second communication channel and transmits the environment update information to another bridge via the other of the first and second communication channels.

5. The bridge according to claim 3, wherein if the other of said first and second portals succeeds in updating the use environment of the other of the first and second communication channels, the other of said first and second portals transmits the environment update information to the another bridge via the other of the first and second communication channels.

6. The bridge according to claim 4, wherein if the other of said first and second portals succeeds in updating the use environment of the other of the first and second communication channels, the other of said first and second portals transmits the environment update information to the another bridge via the other of the first and second communication channels.

7. The bridge according to claim 1, wherein if the other of said first and second portals fails in updating the use environment of the other of the first and second communication channels, the other of said first and second portals transmits updating failure information, which indicates a failure in the updating, to the one of said first and second portals, and the one of said first and second portals transmits the transmitted updating failure information to the one of the first and second communication channels.

8. The bridge according to claim 2, wherein if the other of said first and second portals fails in updating the use environment of the other of the first and second communication channels, the other of said first and second portals transmits updating failure information, which indicates a failure in the updating, to the one of said first and second portals, and the one of said first and second portals transmits the transmitted updating failure information to the one of the first and second communication channels.

9. The bridge according to claim 1, wherein if the other of said first and second portals is connected to a node in an end of the connection, without via the another node, the other of said first and second portals transmits updating success / failure information, which indicates a success or failure in the updating of the use environment, to the one of said first and second portals, and the one of said first and second portals transmits the transmitted updating success / failure information to one of the first and second communication channels.

10. The bridge according to claim 2, wherein if the other of said first and second portals is connected to a node in an end of the connection, without via the another node, the other of said first and second portals transmits updating success / failure information, which indicates a success or failure in the updating of the use environment, to the one of said first and second portals, and the one of said first and second portals transmits the transmitted updating success / failure information to one of the first and second communication channels.

11. The bridge according to claim 1, wherein the environment update information includes information for updating a used bandwidth on the connection, and the use environment includes the used bandwidth on the connection.

12. The bridge according to claim 2, wherein the environment update information includes information for updating a used bandwidth on the connection, and the use environment includes the used bandwidth on the connection.

13. A transmitting apparatus for transmitting information into a network, wherein
said transmitting apparatus is connected to a bridge for functioning as a relay node on the network, via a communication channel constituting one portion of the network,
said transmitting apparatus comprises:
an updating device for updating a use environment of the communication channel; and
an update information generating device for generating environment update information, which is one of the information and which is to update a use environment of a connection, in accordance with a change in a use environment on the network of the transmitted information, and
in case the connection is already established on the network, if the use environment on the network of the transmitted information changes, said updating device updates the use environment of the communication channel and said transmitting apparatus transmits the generated environment update information which is generated by said update information generating device to said bridge.

14. An information system,
comprising the bridge according to claim 1 as the relay node,
dynamically updating the use environment of the connection, in case the connection is already established on the network including said bridge, by transmitting the environment update information to the one of the first and second communication channels and by updating the use environment of the other of the first and second communication channels if said bridge receives the environment update information on the one of said first and second portals via the one of the first and the second communication channels.

15. An information system,
comprising the bridge according to claim 2 as the relay node,
dynamically updating the use environment of the connection, in case the connection is already established on the network including said bridge, by transmitting the environment update information to the one of the first and second communication channels and by updating the use environment of the other of the first and second communication channels if said bridge receives the environment update information on the one of said first and second portals via the one of the first and the second communication channels.

16. A transmitting method of transmitting information on a bridge for functioning as a relay node on a network, wherein said bridge comprises: a first portal for transmitting and receiving information via a first communication channel, the first portal being connected to the first communication channel constituting one portion of the network; and a second portal for transmitting and receiving information via a second communication channel, the second portal being connected to the second communication channel constituting another portion of the network, and said first and second portals can transfer the received information to each other, wherein
in case a connection is already established on the network including said bridge, if one of said first and second portals receives environment update information, which is one of the information and which is to update a use environment of the connection, via one of the first and second communication channels, said method comprises:
on the one of said first and second portals, transferring the received environment update information to the other of said first and second portals, and
on the other of said first and second portals, updating a use environment of the other of the first and second communication channel in accordance with the transferred environment update information.

17. A transmitting method of transmitting information on a bridge for functioning as a relay node on a network, wherein said bridge comprises: a first portal for transmitting and receiving information via a first communication channel, the first portal being connected to the first communication channel constituting one portion of the network; and a second portal for transmitting and receiving information via a second communication channel, the second portal being connected to the second communication channel constituting another portion of the network, and said first and second portals can transfer the received information to each other, wherein
in case a connection is already established on the network including said bridge, if one of said first and second portals monitors a use environment of one of the first and second communication channels and detects that the use environment of the one of the first and second communication channels is updated, said method comprises
on the one of said first and second portals, generating environment update information, which is one of the information and which is to update a use environment of the connection, and transmitting it to the other of said first and second portals, and
on the other of said first and second portals, updating a use environment of the other of the first and second communication channel in accordance with the transmitted environment update information.

18. A transmitting method of transmitting information on a transmitting apparatus for transmitting information into a network, wherein said transmitting apparatus is connected to a bridge for functioning as a relay node on the network, via a communication channel constituting one portion of the network, and said transmitting apparatus comprises: an updating device for updating a use environment of the communication channel; and an update information generating device for generating environment update information, which is one of the information and which is to update a use environment of a connection, in accordance with a change in a use environment on the network of the transmitted information, wherein
in case the connection is already established on the network, if the use environment on the network of the transmitted information changes, said method comprises:
on said updating device, updating the use environment of the communication channel and
on said transmitting apparatus, transmitting the generated environment update information which is generated by said update information generating device, to said bridge.
